# DEMANDE DE BREVET EUROPEEN

(11) **EP 3 391 744 A1**
(43) Date de publication de la demande: **24.10.2018**
(21) Numéro de dépôt: 18166357.6
(22) Date de dépôt: 09.04.2018
(51) Int. Cl.: A01M 7/00, B05B 12/00, B05B 15/50

(54) **ENSEMBLE DE BUSES POUR DISPOSITIF DE PULVÉRISATION POUR LE TRAITEMENT DE CULTURE AVEC DÉTECTION D'ARRÊT DU JET**

(30) Priorité: 19.04.2017 FR 1753372
(71) Demandeur: Exel Industries, 75009 Paris (FR)
(72) Inventeur: CHAPERON, Fabien, 75009 Paris (FR)
(74) Mandataire: Gaillarde, Frédéric F. Ch.

(57) **Abrégé**

Cet ensemble de buse pour dispositif de pulvérisation pour le traitement de cultures agricoles comporte au moins un orifice de distribution (4) d'au moins un produit de traitement (2).

Cet ensemble est remarquable en ce qu'il comporte en aval dudit orifice (4) au moins un jeu d'électrodes (12) permettant de faire passer un signal électrique lorsque celles-ci sont humidifiées sous l'effet du jet de pulvérisation, lesdites électrodes étant destinées à être reliées à un système électronique de détection dudit signal électrique.

## Description

La présente invention concerne un ensemble de buse pour dispositif de pulvérisation pour le traitement de cultures agricoles.

Certains types de cultures, notamment les vignes ou des plantations d'arbres fruitiers, nécessitent des pulvérisations de produits de traitement qui sont généralement faites par le passage d'un tracteur agricole entre les rangs de ces plantes, tractant une installation de pulvérisation comportant des rampes équipées de séries de buses alimentées par une pompe reliée à un réservoir contenant le produit.

Le produit de traitement peut présenter différentes consistances. Les buses de pulvérisation du produit comportant des perçages calibrés de diamètres relativement réduits, avec des produits de traitement suffisamment épais, en particulier pour des bouillies de traitement des vignes, on peut obtenir un bouchage de buses.

Dans le cas d'un pulvérisateur prévu pour des arbres, le tracteur avance généralement entre deux rangées d'arbres avec une pulvérisation latérale de chaque côté sur les arbres.

Si les jets de pulvérisation ne sont pas trop loin du conducteur et si l'éclairage est suffisant, ces jets peuvent rester visibles pour le conducteur présent dans la cabine du tracteur. Il peut s'apercevoir de l'absence de certains jets causée par le bouchage de leur buse.

Dans le cas d'un traitement en hauteur, par exemple pour des haies fruitières hautes, les buses de pulvérisation sont installées plus en hauteur. Suivant la configuration du tracteur les jets de pulvérisation peuvent être difficilement visibles par le conducteur.

Dans le cas d'un pulvérisateur prévu pour des vignes, de nombreuses configurations des rampes existent. On peut traiter les rangs de vigne pardessus avec une rampe passant au-dessus. Dans ce cas le conducteur du tracteur peut généralement garder une vision des jets de pulvérisation pour surveiller leur fonctionnement.

On peut en variante traiter les rangs sur les côtés avec une rampe transversale enjambant plusieurs rangs, et des buses descendant entre chaque espace entre deux rangs pour traiter les côtés de ces rangs par pulvérisation latérale. Dans ce cas on réalise des rampes qui peuvent enjamber jusqu'à huit rangs. Suivant l'ampleur de la végétation, une vue directe par le conducteur depuis la cabine du tracteur peut être impossible.

Dans tous les cas une surveillance directe des jets de pulvérisation par le conducteur au cours du travail, lui demande une certaine attention qui est fatigante, et peut le perturber dans la conduite de son engin.

De plus quand le conducteur s'aperçoit d'une absence d'un jet, si sa surveillance n'est pas constante il ne sait pas depuis quand le traitement est arrêté ce qui est préjudiciable sur la qualité du traitement de la parcelle.

Si la vision de l'opérateur sur les jets n'est pas possible dans les rangs de plantations, il peut s'apercevoir d'une absence de jets à chaque extrémité des rangs dans le cas où il continue la pulvérisation en sortant de ces rangs pour surveiller cette pulvérisation. Un inconvénient est que l'on ne sait pas quand le jet s'est arrêté. On a aussi un certain gaspillage du produit de traitement projeté hors des rangs.

De plus cette possibilité n'est pas réalisable pour des systèmes coupant automatiquement la pulvérisation à l'extrémité des rangs pour éviter ce gaspillage. Dans ce cas l'opérateur ne découvrira le bouchage de buses qu'en fin de chantier lors du nettoyage de son pulvérisateur, sans savoir quand le traitement s'est arrêté.

Pour limiter les problèmes de bouchage de buses, on peut prévoir des préparations de bouillies présentant une dispersion suffisante des particules solides dans l'eau et un maintien de cette dispersion.

On peut prévoir aussi des filtres disposés dans le circuit d'alimentation du produit, qui retiennent les grosses particules solides ou les amas résiduels avant d'arriver aux buses.

On peut enfin prévoir des cycles particuliers de rinçage et de nettoyage du pulvérisateur en fin de travail, pour supprimer tout risque de sédimentation de particules solides dans différents endroits de l'installation après la fin d'un chantier.

Pour ces solutions il faut prévoir des produits de traitement spécifiques qui peuvent être plus chers, des filtres assez fins ne laissant pas passer tous les produits et nécessitant une maintenance, ou augmenter les temps de main-d'oeuvre avec les cycles particuliers de nettoyage.

La présente invention a notamment pour but d'éviter ces inconvénients de la technique antérieure.

Elle propose à cet effet un ensemble de buse pour dispositif de pulvérisation pour le traitement de cultures agricoles, comportant au moins un orifice de distribution d'au moins un produit de traitement, cet ensemble de buse étant remarquable en ce qu'il comporte en aval dudit orifice au moins un jeu d'électrodes permettant de faire passer un signal électrique lorsque celles-ci sont humidifiées sous l'effet du jet de pulvérisation, lesdites électrodes étant destinées à être reliées à un système électronique de détection dudit signal électrique. Dans le contexte de la présente invention, l'expression « en aval » doit s'entendre par rapport au sens de circulation du produit de traitement, lorsque l'ensemble de buse est en fonctionnement.

Le produit de traitement est un produit fluide, pouvant se présenter sous la forme d'un fluide et/ou d'un gaz.

Par pulvérisation on comprend que le produit de traitement est atomisé sous la forme de goutte et idéalement sous la forme de gouttelettes.

Un avantage de cet ensemble de buse est qu'en mesurant la résistivité entre deux électrodes, dans le cas de sortie du jet de produit de traitement venant de l'orifice de distribution, on obtient une humidification des surfaces entre ces électrodes qui vont donner une résistivité plus faible.

Dans le cas d'une absence de sortie du produit de traitement, notamment à cause d'un bouchage de l'orifice de distribution, on obtient un séchage des électrodes, qui peut se faire naturellement dans le temps, ou de manière plus rapide par un jet d'air ou par d'autres moyens comme un chauffage infrarouge. On a alors une augmentation de la résistivité entre les électrodes qui permet d'envoyer un signal au conducteur lui indiquant une défaillance de l'ensemble de buse.

Sans demander au conducteur une attention particulière et quel que soit le type de culture et de traitement, il peut être informé au plus tôt de la défaillance. Le conducteur intervient rapidement, ce qui assure une sécurité de conduite du tracteur, une qualité et une rapidité du travail, et une absence de gaspillage de produits.

L'ensemble de buse selon l'invention peut comporter de plus une ou plusieurs des caractéristiques suivantes, qui peuvent être combinées entre elles.

Avantageusement, l'ensemble de buse comporte deux électrodes comprenant des barrettes parallèles qui sont intercalées d'une électrode à l'autre. On obtient de manière simple des surfaces importantes en regard l'une de l'autre.

Ces électrodes sont disposées pour présenter le maximum de points de rapprochement entre elles.

Ces électrodes peuvent constituer deux peignes fins s'entrecroisant sans contact.

Ces électrodes peuvent présenter une épaisseur de broche la plus fine possible tout en restant rigide de manière à former une paroi trouée à 50% minimum afin de garantir sa traversée par le jet de pulvérisation.

Selon un mode de réalisation, les électrodes sont formées sur un circuit imprimé. Ce moyen est économique.

Selon un autre mode de réalisation, les électrodes constituent un peigne métallique, disposé sensiblement dans un plan perpendiculaire au jet de pulvérisation.

Dans ce cas le peigne est avantageusement intégré par surmoulage dans un support. Ce procédé de surmoulage est économique.

Avantageusement, l'ensemble de buse comporte un système de commande relié au jeu d'électrodes, mesurant le courant passant dans ces électrodes.

Dans ce cas, le système de commande peut mesurer de manière individuelle le courant passant dans un jeu d'électrodes spécifique pour un ensemble de buse. On peut prévenir le conducteur de l'ensemble de buse concerné par une défaillance.

Les électrodes peuvent être constituées d'une matière présentant des propriétés anti-oxydantes par rapport aux produits de traitements utilisés.

Les électrodes peuvent être constituées d'une matière présentant une conductivité électrique d'au moins 1.3x10E6 Siemens/m.

L'une des deux électrodes peut être alimentée électriquement par une tension comprise entre 5Vdc et 15Vdc.

L'ensemble de buse peut comporter un système électronique de détection de présence de tension seuil sur l'autre électrode par mesure d'un courant électrique passant entre les électrodes minimum de 50µA.

Le système électronique de détection peut présenter un dispositif de réglage de la tension seuil à détecter. En complément, l'ensemble de buse peut comporter un moyen de séchage du jeu d'électrodes. La détection de la défaillance est alors très rapide.

Le moyen de séchage peut comporter un jet d'air sous pression.

En variante le moyen de séchage peut réaliser un apport de calories.

La présente invention se rapporte également à un dispositif de pulvérisation comprenant au moins un ensemble de buse conforme à ce qui précède.

L'invention sera mieux comprise et d'autres caractéristiques et avantages apparaîtront plus clairement à la lecture de la description ci-après, donnée à titre d'exemple en référence aux dessins annexés dans lesquels :
- les figures 1 et 2 présentent en coupe axiale respectivement vue de côté et vue de dessus, d'un ensemble de buse à jet pneumatique selon l'invention ;
- la figure 3 présente un type d'électrode disposé sur l'éclateur de cet ensemble de buse ;
- la figure 4 présente en variante un autre type d'électrode disposé sur un éclateur d'un ensemble de buse à jet pneumatique ;
- la figure 5 présente en coupe axiale vue de dessus d'un ensemble de buse à jet pneumatique comportant ce dernier type d'électrode ;
- la figure 6 est un schéma présentant des électrodes vues de face ;
- la figure 7 présente en coupe axiale vue de côté d'un ensemble de buse à un jet porté selon l'invention ; et
- la figure 8 présente en coupe axiale vue de côté, en variante d'un ensemble de buse à jet projeté selon l'invention,
- la figure 9 représente un véhicule agricole équipé d'une rampe de pulvérisation qui comporte un tel ensemble de buse.

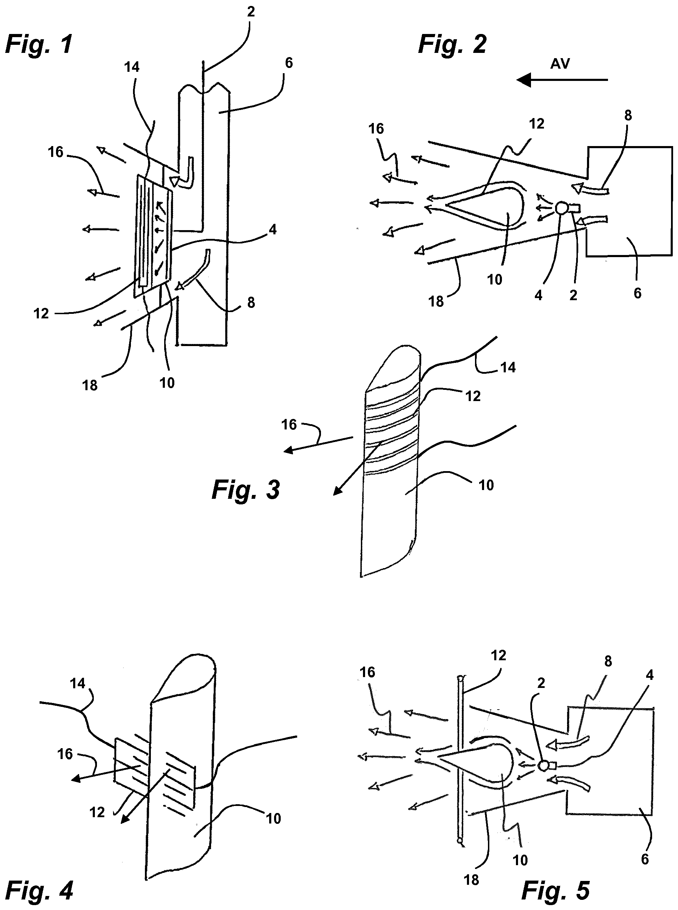

Les figures 1, 2 et 3 présentent un ensemble de buse comportant une arrivée de produit de traitement 2 disposée au centre d'une arrivée d'air sous pression 6, à l'extrémité d'un tuyau, débouchant sur une pluralité d'orifices de distribution de produit de traitement 4 s'étendant dans la direction verticale.

La direction appelée verticale par convention, peut être pour les traitements disposée suivant toutes les orientations. La pulvérisation se fait vers une direction avant indiquée par la flèche « AV ».

L'air sous pression forme un flux 8 venant sur les côtés des orifices 4, qui est guidé latéralement par un diffuseur d'air 18 de forme globalement conique s'ouvrant vers l'avant. Le flux d'air 8 entraîne le produit pour le porter sur un éclateur 10. L'éclateur 10 présente avantageusement une section horizontale de forme aérodynamique, comprenant une partie arrière bombée et une partie avant pointue. On pourra aussi désigner la partie arrière bombée comme un bord d'attaque du produit de traitement, la partie avant comme un bord de fuite de ce produit de traitement.

Au contact de l'éclateur 10 les gouttelettes de produit s'éclatent et se dispersent pour former une fine pulvérisation qui donne le jet pneumatique 16 dispersé de manière régulière dans tout l'arc formé par le diffuseur d'air 18. En réglant le profil aérodynamique de l'éclateur 10 et l'ouverture du diffuseur d'air 18, on réalise un jet de pulvérisation 16 comportant un angle d'ouverture adapté, réalisant un traitement homogène sur toute la surface couverte.

L'éclateur 10 comporte deux électrodes 12 collées sur sa surface, comportant chacune un jeu de barrettes disposées parallèlement et régulièrement espacées, recevant entre deux barrettes une barrette de l'autre électrode.

Chaque électrode 12 comporte un fil d'alimentation électrique 14 qui est relié à un système de commande embarqué sur le véhicule. Le système de commande applique une tension différentielle sur la paire d'électrodes 12, et mesure le courant passant entre ces deux électrodes.

En particulier les électrodes 12 peuvent être formées par un circuit imprimé comportant un support flexible isolant présentant des barrettes conductrices fixées dessus, qui est enroulé et collé sur l'éclateur 10.

La distance entre les barrettes de chaque électrode peut être comprise entre 0,5 mm et 5mm, et en particulier entre 0,5 et 1,5 mm. Lors d'une pulvérisation, l'eau contenue dans le produit de pulvérisation humidifie en permanence les électrodes 12. On obtient une certaine conductivité entre les barrettes parallèles des électrodes 12, qui permet un passage du courant entre ces deux électrodes.

Si l'ensemble de buse se bouche, ou si pour toute autre raison le produit de traitement ne sort plus des orifices 4, on a alors uniquement le flux d'air 8 qui sèche très rapidement la surface de l'éclateur 10. La conductivité entre les deux électrodes 12 diminue fortement, la baisse du courant passant dans ces électrodes est mesurée par le système de commande qui alerte le conducteur par tout moyen comme un voyant lumineux ou un signal sonore.

Le système de commande peut mesurer de manière indifférenciée le courant passant dans les électrodes de toutes les buses de l'installation de pulvérisation, ce qui lui permet de signaler un défaut sans pouvoir préciser la buse défaillante. En variante le système de commande peut mesurer de manière particulière le courant passant dans chaque paire d'électrodes, ce qui lui permet de signaler l'ensemble de buse défaillant.

On peut en complément utiliser tout autre moyen de liaison entre le système de commande et les électrodes 12 des différents ensembles de buses, comme une liaison sans fil ou un réseau multiplexé.

Les figures 4 et 5 présentent une paire d'électrodes 12 formant un peigne métallique rigide disposé dans un plan vertical perpendiculaire au jet de pulvérisation 16, comprenant les barrettes alternées de chaque électrode disposées horizontalement. Chaque côté du peigne comporte un fil électrique 14 relié à une électrode 12, pour la liaison avec le système de commande.

Le peigne est inséré dans l'éclateur 10 un peu avant sa pointe d'extrémité, de manière à présenter ses deux côtés face au jet de pulvérisation 16 qui le traverse. En particulier on peut réaliser l'éclateur 10 par surmoulage d'une matière plastique autour du peigne.

De la même manière le jet de pulvérisation 16 dépose une humidité sur les surfaces des électrodes 12 qui réalise une conduction électrique entre elles.

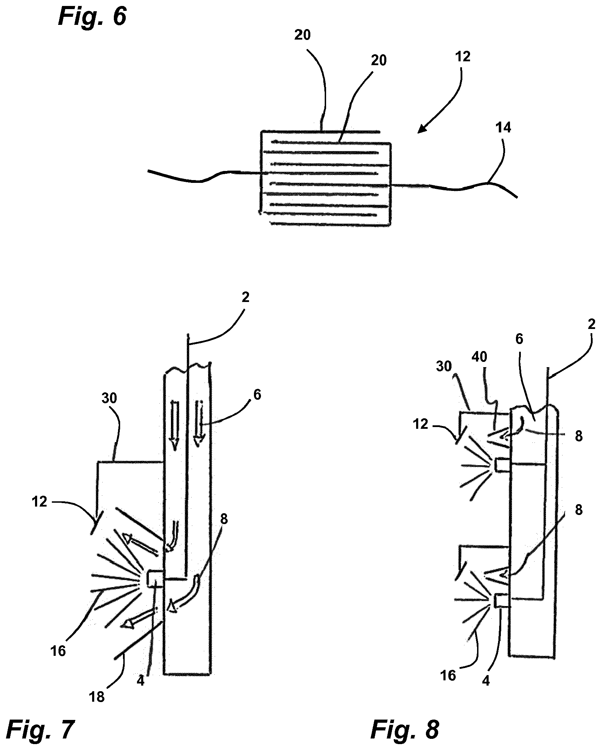

La figure 6 présente un peigne formant les électrodes 12. Le nombre de barrettes horizontales 20, leurs longueurs ainsi que leurs espacements définissent avec la présence d'humidité une capacité de conduction électrique qui est calculée pour permettre à sec une variation de résistivité facilement mesurable par le système de commande.

La figure 7 présente un ensemble de buse pour un jet porté. Le flux d'air 8 guidé par le diffuseur d'air divergent 18, ne fait qu'emmener le produit de traitement sortant de cette buse sous forme de gouttelettes très fines, pour former le jet de pulvérisation 16.

Dans ce cas on dispose un support 30 qui supporte une paire d'électrodes 12 venant sur un côté du jet de pulvérisation 16 pour perturber au minimum ce jet.

De la même manière le jet de pulvérisation 16 dépose une humidité sur la surface des électrodes 12, qui est mesurée par le système de commande pour détecter un arrêt du produit de traitement.

La figure 8 présente un ensemble de buse comprenant plusieurs orifices de distribution 4 disposés parallèlement pour un jet projeté, qui reçoivent le produit de traitement avec une pression suffisante pour réaliser sans jet d'air additionnel directement l'éclatement de ce produit en sortie de ces orifices, et la projection de jets de pulvérisation 16.

Comme pour le jet porté présenté figure 7, on dispose devant chaque orifice 4 un support 30 recevant une paire d'électrodes 12, pour détecter l'absence de sortie du produit par cet orifice.

De plus on ajoute en face de chaque paire d'électrodes 12, un petit injecteur de jet d'air sous pression 40 donnant un faible débit d'air dirigé directement sur les électrodes, afin de les sécher rapidement en cas d'arrêt de passage du produit de traitement. De cette manière on obtient avec une faible consommation d'air sous pression, un séchage rapide des électrodes 12 permettant de signaler sans délai au conducteur le bouchage des buses 4.

En variante on peut disposer tout autre système de séchage rapide des électrodes 12, notamment par un apport de calories, avec par exemple un système radiant infrarouge.

D'une manière générale on obtient de manière simple, économique et efficace un moyen de détection fiable permettant de déceler très rapidement l'arrêt d'un jet de pulvérisation, qui ne demande pas une attention particulière pour le conducteur.

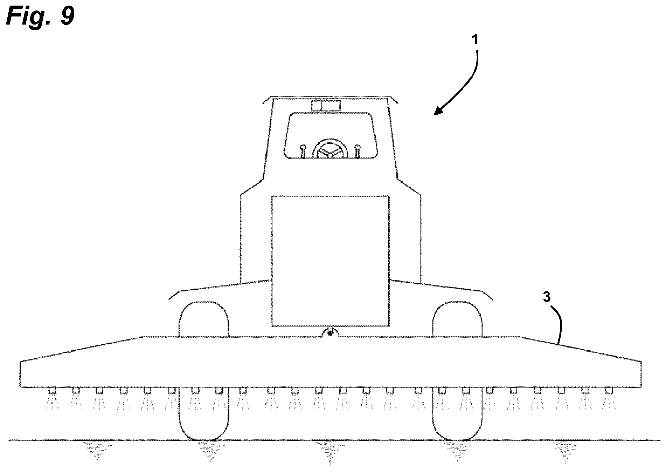

La figure 9 illustre un véhicule agricole 1, tel qu'un tracteur agricole, équipé d'un dispositif de pulvérisation du produit de traitement 2. Le dispositif de pulvérisation est avantageusement une rampe de pulvérisation 3 du produit de traitement 2. La rampe de pulvérisation 3 comporte l'ensemble de buse tel que décrit précédemment. Sans que cela soit limitatif, la rampe de pulvérisation 3 est prévue pour passer au-dessus des rangs de plantations et ainsi traiter ces rangs par le dessus. En variante, une telle rampe de pulvérisation 3 peut être une rampe latérale prévue pour s'entendre latéralement par rapport au véhicule agricole 1 afin d'enjamber plusieurs rangs de plantations.

Bien entendu, la présente invention n'est pas limitée aux modes de réalisation décrits et représentés.

C'est ainsi que les électrodes pourraient être intégrées à d'autres parties de l'ensemble de buse, telles que la paroi du diffuseur 18.

## Revendications

1. Ensemble de buse pour dispositif de pulvérisation pour le traitement de cultures agricoles, comportant au moins un orifice de distribution (4) d'au moins un produit de traitement (2), cet ensemble de buse étant **caractérisé en ce qu'**il comporte en aval dudit orifice au moins un jeu d'électrodes (12) permettant de faire passer un signal électrique lorsque celles-ci sont humidifiées sous l'effet du jet de pulvérisation, lesdites électrodes étant destinées à être reliées à un système électronique de détection dudit signal électrique.

2. Ensemble de buse selon la revendication 1, **caractérisé en ce que** lesdites électrodes (12) sont disposées sensiblement dans le sens du flux du jet de pulvérisation.

3. Ensemble de buse selon la revendication 1, **caractérisé en ce que** lesdites électrodes (12) sont disposées sensiblement perpendiculairement au flux du jet de pulvérisation.

4. Ensemble de buse selon l'une quelconque des revendications précédentes, **caractérisé en ce qu'**il comporte au moins deux électrodes (12) disposées pour présenter le maximum de points de rapprochement entre-elles.

5. Ensemble de buse selon l'une quelconque des revendications précédentes, **caractérisé en ce que** les électrodes (12) sont formées tel un circuit imprimé.

6. Ensemble de buse selon l'une quelconque des revendications précédentes, **caractérisé en ce que** les électrodes (12) constituent deux peignes fins s'entrecroisant sans contact.

7. Ensemble de buse selon la revendication 6, **caractérisé en ce que** les électrodes (12) en forme de peigne présentent une épaisseur de broche la plus fine possible tout en restant rigide de manière à former une paroi trouée à 50% minimum afin de garantir sa traversée par le jet de pulvérisation (16).

8. Ensemble de buse selon la revendication 6, **caractérisé en ce que** les peignes rigides sont intégrés par surmoulage dans un support (10) pouvant faire partie intégrante de la buse (4).

9. Ensemble de buse selon l'une quelconque des revendications précédentes, **caractérisé en ce que** les électrodes (12) sont constituées d'une matière présentant des propriétés anti-oxydantes par rapport aux produits de traitements utilisés.

10. Ensemble de buse selon l'une quelconque des revendications précédentes, **caractérisé en ce que** les électrodes sont constituées d'une matière présentant une conductivité électrique d'au moins 1.3x10E6 Siemens/m.

11. Ensemble de buse selon l'une quelconque des revendications précédentes, **caractérisé en ce que** l'une des deux électrodes est alimentée électriquement par une tension comprise entre 5Vdc et 15Vdc.

12. Ensemble de buse selon l'une quelconque des revendications précédentes, **caractérisé en ce qu'**il comporte un système électronique de détection de présence de tension seuil sur l'autre électrode par mesure d'un courant électrique passant entre les électrodes minimum de 50µA.

13. Ensemble de buse selon la revendication 11, **caractérisé en ce que** le système électronique de détection présente un dispositif de réglage de la tension seuil à détecter.

14. Ensemble de buse selon l'une quelconque des revendications précédentes, **caractérisé en ce qu'**il comporte un moyen de séchage du jeu d'électrodes (12).

15. Ensemble de buse selon la revendication 14, **caractérisé en ce que** le moyen de séchage comporte un jet d'air sous pression (8).

16. Ensemble de buse selon la revendication 13, **caractérisé en ce que** le moyen de séchage réalise un apport de calories.

17. Dispositif de pulvérisation, **caractérisé en ce qu'**il comprend au moins un ensemble de buse conforme à l'une quelconque des revendications précédentes.
